# EUROPÄISCHE PATENTANMELDUNG

(11) **EP 1 355 143 A2**
(43) Veröffentlichungstag der Anmeldung: **22.10.2003**
(21) Anmeldenummer: 03405261.3
(22) Anmeldetag: 15.04.2003
(51) Int. Cl.: G01N 1/32, G01N 1/28

(54) **Verfahren zur Präparation einer TEM-Lamelle**

(30) Priorität: 18.04.2002 CH 6612002
(71) Anmelder: EMPA Eidgenössische Materialprüfungs- und Forschungsanstalt, CH-8600 Dübendorf (CH)
(72) Erfinder: Reiner, Joachim, 8802 Kilchberg (CH); Gasser, Philippe, 8057 Zürich (CH)
(74) Vertreter: Clerc, Natalia

(57) **Zusammenfassung**

Das Verfahren betrifft die Präparation einer TEM-Lamelle aus einer strukturierten Probe, insbesondere eines mikroelektronischen Bauteils, welche eine an einem unbekannten Ort befindliche, zu untersuchende Stelle aufweist. Zuerst wird vorlokalisiert, innerhalb welchem Strukturelement sich das zu untersuchende Gebiet befindet. Anschliessend wird die TEM-Lamelle mittels eines Ionenstrahls eines FIB-Geräts so dick geschnitten, dass das gesamte Strukturelement in der TEM-Lamelle enthalten ist. Dieses Verfahren erhöht die Wahrscheinlichkeit, dass sich die zu untersuchende Stelle tatsächlich in der TEM-Lamelle befindet, erheblich, ohne dass die Probe oder Lamelle allzu oft transportiert werden muss.

## Beschreibung

### Technisches Gebiet

Die Erfindung betrifft ein Verfahren zur Präparation einer TEM-Lamelle gemäss Oberbegriff des Patentanspruchs 1. Derartige TEM-Lamellen eignen sich insbesondere zur Untersuchung von Defekten in integrierten Schaltungen.

### Stand der Technik

Transmissions-Elektronenmikroskope werden zur Analyse und physikalischen Charakterisierung von Materialien, insbesondere zur Fehleranalyse von mikroelektronischen Bauteilen wie Halbleiterbauelemente, eingesetzt. Diese physikalische Analyse lokaler, ins Material eingeschlossener Defekte, wie zum Beispiel eines Gateoxiddurchbruchs, ist wichtig für das Verständnis der Vorgänge in den Materialien.

Um eine gute Abbildung zu erhalten, werden die zu analysierenden Proben in Form von TEM-Lamellen mit einer typischen Dicke von 0.1 µm präpariert. Die Präparation der TEM-Lamellen erfolgt üblicherweise mittels lokaler Materialabtragung mit einem feinen Ionenstrahl eines FIB-Geräts (FIB = Focused Ion Beam) oder eines Zweistrahlgeräts. Im Zweistrahlgerät ist ein FIB-Gerät mit einem Rasterelektronenmikroskop REM kombiniert. Der REM-Strahl fällt dabei in einem anderen Winkel, aber auf dieselbe Stelle der Probe, so dass ohne Veränderung der Lage der Probe diese abwechslungsweise mittels des FIB-Strahls präpariert und mittels des REM-Strahls untersucht werden kann. Ein derartiges Gerät ist beispielsweise in US-A-5'525'806 beschrieben.

Es lassen sich verschiedene Typen von Lamellen herstellen. In einem ersten Fall wird ein Schnitt parallel zur Oberfläche der Probe durchgeführt. Erhalten werden sogenannte SAPTEM-Lamellen (SAP = specific area planar sectioning). In einem anderen Fall wird ein Querschnitt der Probe hergestellt. Diese Lamelle wird SAXTEM-Lamelle genannt (SAX = specific area cross sectioning). Verfahren zur Herstellung derartiger TEM-Lamellen mittels eines FIB-Strahls sind beispielsweise in S. Subramanian et al., "A selected Area Planar TEM (SAPTEM) Sample Preparation Procedure for Failure Analysis of Integrated Circuits", Proceedings from the 24th International Symposium for Testing and Failure Analysis, 1998, Seite 131-135, und in R.M. Langford et al., "Cantilever technique for the preparation of cross sections for transmission electron microscopy using focused ion beam workstation", J.Vac. Sci. Technol. B 18(1), Jan/Feb 2000, Seite 100-103, beschrieben.

Für eine TEM-Untersuchung eines Defektes oder eines anderen lokal begrenzten Gebietes ist es erforderlich, eine TEM-Lamelle zu präparieren, welche den interessierenden Ort auch tatsächlich enthält. Ist der Defekt oder das Gebiet sehr klein, so ist eine Vorlokalisierung mit einer Genauigkeit von kleiner als 50 nm erforderlich. Verfahren für eine derart genaue Vorlokalisierung gibt es praktisch nicht. Vorlokalisierungen werden im Stand der Technik zwar mittels Emmissionsmikroskopie, Potentialkontrastverfahren oder OBIRCH durchgeführt, ohne jedoch diese Genauigkeit zu erreichen. Zudem muss die Lamelle mit derselben Genauigkeit von ca. 50 nm auf der Probe positioniert werden, was wiederum nicht einfach ist.

Beispielsweise zeigt ein Gateoxiddurchbruch in einem CMOS-Transistor bei angelegter Spannung häufig eine lokale Lichtemission. Dadurch kann die Stelle mit der Emissionsmikroskopie mit einer Ortsauflösung von ca. 1 µm lokalisiert werden. Bei einer Lamellendicke von 0.1 µm (100 nm) beträgt die Wahrscheinlichkeit, dass der Defekt sich anschliessend in der Lamelle befindet, etwa 1:10. Es ist also nicht unmöglich, aber sehr aufwendig, solche kleinen Defekte im Transmissions-Elektronenmikroskop TEM zu untersuchen.

Jon C. Lee et al., "A Novel Application of the FIB Lift-out Technique for 3-D TEM Analysis", Microelectronics Reliability 41 (2001), Seite 1551-1556, schlägt vor, für die Vorlokalisierung von sehr kleinen Schäden das TEM zu verwenden. Hierfür wird zuerst eine SAPTEM-Lamelle hergestellt, diese im TEM untersucht und der Defekt lokalisiert. Anschliessend wird aus der SAPTEM-Lamelle eine SAXTEM-Lamelle geschnitten, welche den Defekt mit grosser Wahrscheinlichkeit beinhaltet. Diese SAXTEM-Lamelle wird erneut ins TEM gelegt, um den Defekt nun zu untersuchen. Nachteilig ist, dass die Probe beziehungsweise die Lamelle zweimal im FIB-Gerät bearbeitet werden muss. Das Handling dieser sehr kleinen Proben und Lamellen ist jedoch äusserst diffizil, so dass die Lamellen oft beim Handling beschädigt werden. Zudem setzt diese Methode voraus, dass bekannt ist, in welcher Ebene sich der Defekt befindet. Diese Methode ist zudem in vielen Fällen nicht anwendbar. Wenn nämlich die interessierende Stelle sehr klein ist oder wenn sie von einem Material bedeckt ist, welches die Beobachtung erschwert, stösst sie an ihre Grenze. Ein Gateoxidschaden kann bei modernen CMOS-Technologien, welche eine Gateoxiddicke von weit unter 10 nm aufweisen können, sehr klein sein. Im Extremfall besteht er aus einem atomaren Punktdefekt, wie beim sogenannten "soft breakdown" vermutet wird. Hierfür ist die obengenannte Methode ungeeignet, denn der Schaden ist von Polysilizium bedeckt, das in modernen Technologien ausserdem noch silizidiert sein kann. Durch das Abbild der irregulären polykristallinen Struktur des Polysiliziums wird die Abbildung eines kleinen Defekts überdeckt, und eine sichere Lokalisierung ist nicht mehr möglich.

### Darstellung der Erfindung

Es ist deshalb Aufgabe der Erfindung, ein Verfahren zur Präparation einer TEM-Lamelle aus einer Probe zu schaffen, welche die Wahrscheinlichkeit erhöht, dass sich eine zu untersuchende Stelle in der Lammele befindet, und welche trotzdem ein mehrfaches Handling der Probe oder Lamelle vermeidet.

Diese Aufgabe löst ein Verfahren mit den Merkmalen des Patentanspruches 1.

Im erfindungsgemässen Verfahren wird zuerst lokalisiert, in welchem Strukturelement der Probe sich die zu untersuchende Stelle befindet. Anschliessend wird die TEM-Lamelle so dick geschnitten, dass das gesamte Strukturelement in der TEM-Lamelle enthalten ist.

Bei klassischen Proben weist die TEM-Lamelle somit eine grössere Dicke auf als die bisher üblichen 100 nm. Es hat sich jedoch gezeigt, dass die Auflösung des Transmissions-Elektronenmikroskops ausreicht, um auch bei derartig dicken Lamellen eine genügende Analyse des zu untersuchenden Gebiets zu ermöglichen.

Das erfindungsgemässe Verfahren eignet sich insbesondere für die Fehleranalyse bei mikroelektronischen Bauteilen, insbesondere für die Untersuchung von CMOS-Transistoren. Sie ist jedoch nicht darauf begrenzt.

Weitere vorteilhafte Varianten des Verfahrens gehen aus den abhängigen Patentansprüchen hervor.

### Kurze Beschreibung der Zeichnung

Im folgenden wird der Erfindungsgegenstand anhand eines bevorzugten Ausführungsbeispiels, welches in der beiliegenden Zeichnung dargestellt ist, erläutert. Es zeigen:
- Figur 1: einen Längsschnitt durch einen Teil eines CMOS-Transistors zur Herstellung einer TEM-Lamelle gemäss dem Stand der Technik;
- Figur 2: einen Längsschnitt durch einen Teil eines CMOS-Transistors zur Herstellung einer TEM-Lamelle gemäss dem erfindungsgemässen Verfahren und
- Figur 3: eine Ansicht einer TEM-Lamelle mit einer darin enthaltenen defekten Stelle.

### Wege zur Ausführung der Erfindung

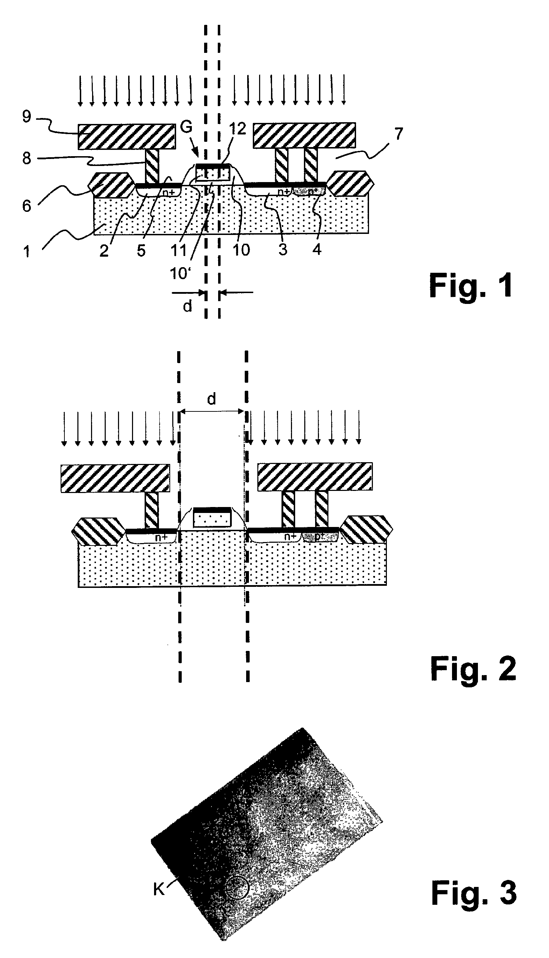

In Figur 1 ist als Probe ein Teil eines Halbleiterbauelementes dargestellt. Es handelt sich um einen CMOS-Transistor bekannten Aufbaus. In einem Siliziumsubstrat 1 sind verschiedene Zonen dotiert: eine n⁺-Zone 2 für einen Drain, eine n⁺-Zone 3 für eine Source und eine p⁺-Zone 4 für einen Substratkontakt. Die Zonen sind mit einer Silizidschicht 5 bedeckt, welche beidseitig von LOCOS-Schichten 6 begrenzt ist. Über der Silizidschicht 5 ist eine Siliziumdioxidschicht 7 vorhanden, welche von Wolframkontakten 8 durchsetzt ist. Die Wolframkontakte 8 kontaktieren Metallschichten 9 des Source- und Drainanschlusses. Zwischen Source und Drain ist ein Gate G vorhanden, welches auf einer Gateoxidschicht 10' angeordnet und von einem Spacer 10 aus Siliziumdioxid begrenzt ist. Das Gate G besteht im wesentlichen aus einer Polysiliziumschicht 11, welche mit einer Silizidschicht 12 bedeckt ist. In Figur 1 ist der für die Herstellung einer SAXTEM-Lamelle verwendete FIB-Strahl mit Pfeilen dargestellt. Die gestrichelten Linien stellen die Schnittlinien für die Lamelle dar. Wie in Figur 1 sichtbar, wird im Stand der Technik die Lamelle relativ dünn geschnitten, so dass nur ein Teil des Gates G darin enthalten ist. Typische Dicken d betragen 100 nm.

Anhand Figur 2 lässt sich nun das erfindungsgemässe Verfahren beschreiben. Als Beispiel wurde ein gleich strukturiertes Halbleiterbauteil dargestellt wie in Figur 1. Das erfindungsgemässe Verfahren ist jedoch nicht auf derartige Bauteile oder Strukturen begrenzt.

Im erfindungsgemässen Verfahren wird zunächst eine zu untersuchende Stelle bzw. ein Gebiet, beispielsweise ein Defekt, möglichst genau vorlokalisiert. Das heisst, es wird bestimmt, in welchem Strukturelement der strukturierten Probe sich die Stelle befindet. Im hier dargestellten Beispiel ist dieses Strukturelement das Gate G.

Diese Vorlokalisierung lässt sich mittels bekannter Methoden wie beispielsweise Emissionsmikroskopie, elektrisches Ausmessen der Probe oder Kombinationen davon durchführen. Bei integrierten Schaltungen wird vorzugsweise zudem die Kenntnis der Schaltungstopologie zu Hilfe genommen. In der integrierten Schaltung ist es in der Regel möglich, den Defekt soweit zu lokalisieren, dass bekannt ist, in welchem aktiven Element (z.B. Transistor) er sich befindet. Wird beispielsweise ein Gate-Leckstrom in einem Transistor geortet, der mehrere Finger hat, muss durch andere teilweise nicht-elektrische Methoden ermittelt werden, in welchem der Finger er auftritt.

Anschliessend wird mit einem FIB-Gerät eine TEM-Lamelle, vorzugsweise eine SAXTEM-Lamelle zugeschnitten. Andere geeignete Geräte zur Zuschneidung der TEM-Lamelle lassen sich ebenfalls einsetzen. Die TEM-Lamelle ist dabei so dick und so positioniert, dass sie das gesamte vorlokalisierte Strukturelement enthält, in welchem sich die zu untersuchende Stelle vermutlicherweise befindet. Im hier dargestellten Beispiel enthält die Lamelle somit das gesamte Gate G beziehungsweise den gesamten Transistorfinger. Damit ist sichergestellt, dass sich die zu untersuchende Stelle auch tatsächlich in der TEM-Lamelle befindet. In Figur 3 ist eine Ansicht der Lamelle dargestellt. Der Kreis K bezeichnet darin den Ort der zu untersuchenden Stelle beziehungsweise des Defekts. Der Defekt selber ist in dieser Auflösung nicht erkennbar.

Die Dicke oder Breite der TEM-Lamelle kann deshalb in Abhängigkeit der Strukturelemente mehr als 100 nm betragen. Bei klassischen Halbleiterbauelementen sind sie dicker als 250 nm und können durchaus Werte von annähernd 500 nm aufweisen. In den modernen und erst recht bei zukünftigen Technologien sind die Strukturelemente jedoch oft wesentlich kleiner als 250 nm, so dass in diesen Fällen auch die Lamelle durchaus relativ schmal ist. Daher ist die vorgestellte Methode insbesondere, jedoch nicht ausschliesslich, für moderne und zukünftige Technologien mit sehr kleinen Strukturen geeignet.

Bei der Präparation der Lamelle wird vorzugsweise darauf geachtet, dass das vorlokalisierte Strukturelement nicht beschädigt wird. Im hier dargestellten Beispiel wird die Lamelle so geschnitten, dass ihre Lamellenflächen parallel zur Längsseite des Gates G liegen und einen genügenden Abstand von der Polysiliziumschicht 11 des Gates G aufweisen, welcher verhindert, dass das Gate G beschädigt wird. Der Abstand beträgt typischerweise circa 50 nm.

Der Materialabtrag mit dem FIB-Strahl wird erfindungsgemäss beendet, bevor das vorlokalisierte Strukturelement erreicht worden ist. In einer bevorzugten Variante des Verfahrens werden deshalb gut erkennbare Strukturelemente berücksichtigt, welche benachbart zum vorlokalisierten Strukturelement angeordnet sind. Diese werden während des Materialabtrags beziehungsweise zwischen einzelnen Abtragungsschritten beobachtet. Dies lässt sich je nach Art des Strukturelementes bereits im Bild des FIB-Strahls erkennen. Vorzugsweise wird jedoch hierfür das eingangs erwähnte Zweistrahlgerät eingesetzt. Im hier dargestellten Beispiel sind die Wolframkontakte 8 derartig gut erkennbare Strukturelemente. Es können jedoch auch andere Strukturelemente sein, welche beispielsweise aus einem anderen Material bestehen als das vorlokalisierte Strukturelement. Beispielsweise lässt sich die Silizidschicht 5 auf den Diffusionszonen 2, 3 verwenden.

Voraussetzung für die Orientierung an benachbarten Strukturelementen ist die Kenntnis des Querschnitts des zu untersuchenden Strukturelementes und seiner Umgebung. Bei Proben mit unbekanntem Aufbau wird in einer bevorzugten Variante des Verfahrens eine Referenzprobe verwendet, welche dieselbe Strukturierung aufweist wie die zu untersuchende Probe. Von dieser Referenzprobe wird ein Querschnitt, vorzugsweise eine SAPTEM-Lamelle, hergestellt. Vorzugsweise wird hierfür ebenfalls das FIB-Gerät verwendet. Mittels des REM oder eines anderen geeigneten Geräts werden dann die interessierenden Strukturelemente in der Referenzprobe detektiert und lokalisiert.

Das erfindungsgemässe Verfahren erhöht somit die Wahrscheinlichkeit, dass sich das zu untersuchende Gebiet tatsächlich in der TEM-Lamelle befindet, erheblich, ohne dass die Probe oder Lamelle allzu oft transportiert werden muss.

### Bezugszeichenliste

- d: Dicke der TEM-Lamelle
- G: Gate
- K: Kreis

- 1: Siliziumsubstrat
- 2: n⁺-Zone des Drains
- 3: n⁺-Zone der Source
- 4: p⁺-Zone des Substratkontaktes
- 5: Silizidschicht
- 6: LOCOS-Schicht
- 7: Siliziumdioxidschicht
- 8: Wolframkontakt
- 9: Metallschicht
- 10: Spacer
- 11: Polysiliziumschicht
- 12: Silizidschicht

## Patentansprüche

1. Verfahren zur Präparation einer TEM-Lamelle aus einer strukturierten Probe, insbesondere eines mikroelektronischen Bauteils, wobei die Probe eine an einem unbekannten Ort befindliche, zu untersuchende Stelle aufweist, zwecks Untersuchung der TEM-Lamelle in einem Transmissions-Elektronenmikroskop (TEM), wobei die TEM-Lamelle aus der Probe geschnitten wird, vorzugsweise mittels eines Ionenstrahls eines FIB-Geräts, **dadurch gekennzeichnet, dass** vorlokalisiert wird, innerhalb welchem Strukturelement sich die zu untersuchende Stelle befindet und dass die TEM-Lamelle so dick geschnitten wird, dass das gesamte vorlokalisierte Strukturelement in der TEM-Lamelle enthalten ist.

2. Verfahren nach Anspruch 1, **dadurch gekennzeichnet, dass** die Probe im Querschnitt geschnitten wird, so dass eine SAXTEM-Lamelle entsteht.

3. Verfahren nach einem der Ansprüche 1 oder 2, **dadurch gekennzeichnet, dass** die TEM-Lamelle eine Dicke aufweist, welche unwesentlich grösser ist als die Breite des vorlokalisierten Strukturelementes.

4. Verfahren nach einem der Ansprüche 1 bis 3, **dadurch gekennzeichnet, dass** eine TEM-Lamelle geschnitten wird, welche dicker als 100 nm, insbesondere dicker als 250 nm, ist.

5. Verfahren nach einem der Ansprüche 1 bis 4, **dadurch gekennzeichnet, dass** eine TEM-Lamelle geschnitten wird, welche annähernd 500 nm dick ist.

6. Verfahren nach einem der Ansprüche 1 bis 5, **dadurch gekennzeichnet, dass** vor dem Zuschnitt der TEM-Lamelle an einer Referenzprobe mit gleicher Strukturierung ein Querschnitt hergestellt wird zwecks Erkennung der einzelnen Strukturelemente.

7. Verfahren nach einem der Ansprüche 1 bis 6, **dadurch gekennzeichnet, dass** vor dem Zuschneiden der TEM-Lamelle im vermuteten Bereich der zu untersuchenden Stelle ein geeignetes Strukturelement ermittelt wird.

8. Verfahren nach einem der Ansprüche 1 bis 7, **dadurch gekennzeichnet, dass** beim Schneiden der TEM-Lamelle beobachtbare Strukturelemente, welche in der Probe benachbart zu dem die zu untersuchende Stelle beinhaltenden Strukturelement angeordnet sind, berücksichtigt werden.

9. Verfahren nach Anspruch 8, **dadurch gekennzeichnet, dass** die beobachtbaren Strukturelemente mittels eines FIB-Signals des FIB-Geräts oder eines REM-Signals eines im FIB-Gerät integrierten Rasterelektronenmikroskops beobachtet werden.

10. Verfahren nach einem der Ansprüche 1 bis 9, **dadurch gekennzeichnet, dass** als Probe mindestens ein Teil eines Halbleiterelement, insbesondere eines CMOS-Transistors, verwendet wird.
